Europäisches Patentamt

European Patent Office

Office européen des brevets

(19)

(11) EP 1 462 997 A2

(12) EUROPEAN PATENT APPLICATION

(43) Date of publication:
29.09.2004 Bulletin 2004/40

(51) Int Cl.7: G06T 7/00

(21) Application number: 04251724.3

(22) Date of filing: 25.03.2004

(84) Designated Contracting States:
AT BE BG CH CY CZ DE DK EE ES FI FR GB GR
HU IE IT LI LU MC NL PL PT RO SE SI SK TR
Designated Extension States:
AL LT LV MK

(30) Priority: 25.03.2003 JP 2003083349

(71) Applicant: FANUC LTD
Minamitsuru-gun, Yamanashi 401-0597 (JP)

(72) Inventors:
• Watanabe, Atsushi c/o Room 109
LifepatioHamadayama
Tokyo 168-0072 (JP)

• Warashina, Fumikazu
Room 10-307 FANUC Manshonh.
Minamitsuru-gun Yamanashi 401-0511 (JP)
• Yamada, Makoto
Minamitsuru-gun, Yamanashi 401-0301 (JP)

(74) Representative: Billington, Lawrence Emlyn
Haseltine Lake & Co.
Imperial House
15-19 Kingsway
London WC2B 6UD (GB)

(54) **Image processing device**

(57) An image processing device for detecting an object whose position and orientation are unknown and for recognizing three dimensional position and/or orientation of the object. A model pattern used for a pattern matching is stored and subject to N geometrical transformations. After initial setting of an index i that specifies the i-th geometrical transformation (S2), the i-th transformed model pattern is prepared (S3), and, using this pattern, a pattern matching is performed (S4). A local maximum point having a similarity equal to or higher than a preset value is searched for. The image coordinate of such a point, if any, is extracted (S5) and stored together with information on a three dimensional relative orientation used for the preparation of the transformed model pattern concerned. Based on the information on the three dimensional relative orientation corresponding to the pattern having the best similarity, the three dimensional position and/or orientation is recognized.

FIG. 6

```
          START
            │
            ▼
  ┌──────────────────────┐
  │ GENERATE N GEOMETRICAL│  S1
  │    TRANSFORMATIONS     │
  └──────────────────────┘
            │
            ▼
       ┌─────────┐
       │ i ← 1   │   S2
       └─────────┘
            │
            ▼
  ┌──────────────────────┐
  │ SUBJECT MODEL PATTERN │  S3
  │ TO i-TH GEOMETRICAL   │
  │   TRANSFORMATION      │
  └──────────────────────┘
            │
            ▼
  ┌──────────────────────┐
  │ PERFORM PATTERN       │
  │ MATCHING BETWEEN      │  S4
  │ CAPTURED IMAGE AND    │
  │ TRANSFORMED MODEL     │
  │     PATTERN           │
  └──────────────────────┘
            │
 ┌─────────┐│
 │i ← i+1  ││
 └─────────┘▼
  S7   ┌──────────────┐
       │ EXTRACT PEAK │  S5
       │ FROM MATCHING│
       │   RESULT     │
       └──────────────┘
            │
      Yes   ▼
  ◄────────◇ i <N?     S6
           └───┘
            │ No
            ▼
          END
```

**Description**

BACKGROUND OF THE INVENTION

1. Field of the Invention

The present invention relates to an image processing device for processing an image captured by a visual sensor to thereby acquire information on the position and/or orientation of an object, which is suitable for use in combination with a robot. The present invention is applied for example to parts recognition, especially to an application in which unknown three-dimensional position and orientation of an object must be recognized.

2. Description of Related Art

It is in practice difficult using automatic machinery such as a robot to take out individual parts from a group of parts of the same shape that are randomly stacked or received at three-dimensionally different positions/orientations in a predetermined region (for instance, in a fixedly positioned basket-like container). To enable automatic machinery such as a robot to pick up a part whose position and orientation are unknown and then place or transport it on a pallet or to a predetermined position in machinery or apparatus, the part must be arranged beforehand in known position and orientation so that it may be taken out using the robot.

As mentioned above, the essential reason why parts having the same shape and various three dimensional positions/orientations is difficult to be taken out by using the robot is that the positions/orientations of individual parts cannot be determined with reliability. To solve this problem, various methods have been proposed, in which an image of a part as an operation object is captured and image data obtained is processed by using an image processing device to determine the position and/or orientation of the object.

For example, there may be mentioned a pattern matching (or template matching) method using normalized crosscorrelation values, a pattern matching method using a SAD (Sum of Absolute Difference), a pattern matching method using feature points, a generalized Hough transform method, etc. (refer to JP-A-2000-293695).

However, any of these methods are merely intended to recognize that portion of the image data which has the same shape (or which is a grayscale pattern of the same shape) as that of a taught model pattern or template. When objects (here and hereinafter, parts, for example) are each at an orientation two-dimensionally different from that determined at the time of teaching the model pattern, i.e., when the objects are subject only to parallel or rotary displacement in a plane perpendicular to the optical axis of a camera, image recognition can be performed. On the other hand, image recognition cannot be performed, if the objects are at an orientation three-dimensionally different from that determined when the model pattern was taught, as in a case where they are randomly stacked with irregular orientation.

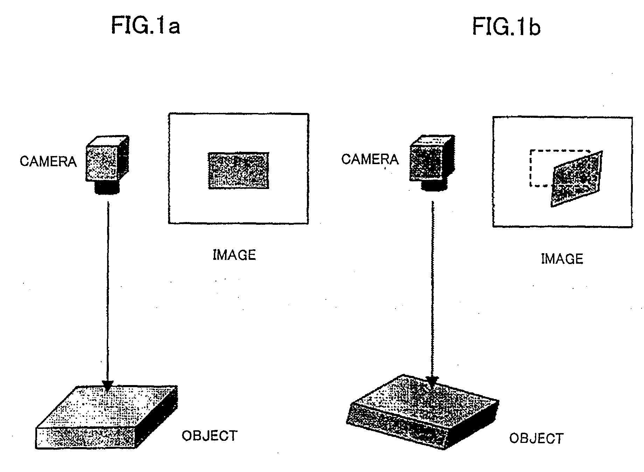

As shown in FIGS. 1a and 1b, in general, the orientation of an object is three-dimensionally different between when a model pattern is taught (FIG. 1a) using a camera for capturing an image of one object (or of a dummy having the same shape as that of the object) and when an attempt is made to actually recognize the object (FIG. 1b). For this reason, the object image (two dimensional) obtained for the actual image recognition (FIG. 1b) is different in shape from that (two dimensional) obtained at the time of teaching (FIG. 1a). This makes it impossible to recognize the object by means of a pattern matching method based on the model pattern taught beforehand.

SUMMARY OF THE INVENTION

The present invention provides an image processing device capable of detecting an object (a part, for example) in acquired image data and recognizing a three dimensional position and/or orientation of the object, simply based on a single model pattern of the object taught beforehand, not only when there is a parallel displacement and/or a rotational displacement and/or a vertical displacement (scaling on image) of the object that does not change the shape of an object image as compared to that at the time of teaching the model pattern, but also when the object is subject to a three dimensional relative position displacement so that the shape of the object image becomes different from that at the time of the teaching.

In the present invention, a pattern matching is performed, using a transformed model pattern obtained by geometrically transforming the taught model pattern, for recognition of an object subject to not only a parallel displacement, a rotational displacement and/or a scaling but also a three dimensional displacement.

More specifically, the present invention is applied to an image processing device for determining the position and/or orientation of an object by performing a pattern matching between a model pattern of the object and image data obtained by capturing an image of the object.

According to one aspect of the present invention, the image processing device comprises: image data capturing means for capturing image data containing an image of the object; model pattern creating means for creating a model pattern based on image data of a reference object with a reference orientation relatively to the image capturing means captured by the image capturing means, said reference object having a shape substantially identical to that of the object; transformation means for performing two-dimensional and geometrical transformation of the created model pattern to generate a transformed model pattern representing an image of the object with an orientation different from the reference orientation; pattern matching means for performing a pattern matching of the image data of the object captured by the image capturing means with the transformed model pattern; selecting means for repeatedly performing the generation of a transformed model pattern and the pattern matching of the image data of the object with the transformed model pattern to thereby select one of the transformed model patterns in conformity with the image data of the object, and obtain information on a position of the image of the object in the image data; and determining means for determining three-dimensional position and/or orientation of the object based on the information on the position of the image of the object in the image data and information on the orientation of the selected one of the transformed model patterns.

According to another aspect of the present invention, the image processing device comprises: image data capturing means for capturing image data containing an image of the object; model creating means for creating a model pattern based on image data of a reference object with a reference orientation relative to the image data capturing means captured by the image data capturing means, said reference object having a shape substantially identical to that of the object; transformation means for performing two-dimensional and geometrical transformation of the created model pattern to generate a plurality of transformed model patterns each representing an image of the object with an orientation different from the reference position; storage means for storing the plurality of transformed model patterns and information on orientations of the respective transformed model patterns; pattern matching means for performing pattern matching of the image data of the object captured by the image capturing means with the plurality of transformed model patterns to thereby select one of the transformed model patterns in conformity with the image data of the object, and obtain information on a position of the image of the object in the image data; and determining means for determining three-dimensional position and/or orientation of the object based on information on the position of the image of the object in the image data and the information on an orientation of the selected one of the transformed model patterns.

The transformation means may perform the two-dimensional and geometrical transformation of an affine transformation, and in this case the image processing device may further comprises additional measuring means for obtaining a sign of inclination of the object with respect to the image capturing means.

The additional measuring means may perform dividing of a model pattern into at least two partial model patterns which are subject to the affine transformation to generate transformed partial model patterns, and pattern matching of the image data of the object with the transformed partial model patterns to determine most conformable sizes, and may determine the sign of the inclination based on comparison of the sizes of the conformable partial model patterns with each other.

Alternatively, the additional measuring means may perform measurement of distances from a displacement sensor separately provided in the vicinity of the image capturing means to at least two points on the object using the displacement sensor, and may determine the sign of the inclination based on comparison of the measured distances. Further, the additional measuring means may perform additional pattern matching of image data of the object captured after the image data capturing means is slightly moved or inclined and may determine the direction of the inclination based on judgment whether an inclination of image of the object becomes larger or smaller than the selected one of the transformed model patterns.

The image processing device may be incorporated into a robot system. In this case, the robot system may comprise: storage means storing an operating orientation of the robot relative to the object or storing an operating orientation and an operating position of the robot relative to the object; and robot control means for determining an operating orientation of the robot or the operating orientation and an operating position of the robot based on the determined three-dimensional position and/or orientation of the object. Also, the image capturing means may be mounted on the robot.

BRIEF DESCRIPTION OF THE DRAWINGS

FIGS. 1a and 1b are views for explaining problems encountered in the prior art pattern matching method, in which FIG. 1a shows a state where a model pattern is taught and FIG. 1b shows a state where an attempt is made to actually recognize an object;
FIG. 2 is a schematic view showing the overall arrangement of a robot system according to an embodiment of the present invention;
FIG. 3 is a view for explaining what image is acquired by a camera when an object is inclined;

FIG. 4 is a view for explaining how to determine matrix elements in a rotating matrix;

FIG. 5 is a view for explaining a model of an ideal pinhole camera;

FIG. 6 is a flowchart for explaining basic processing procedures executed in the embodiment;

FIG. 7a is a view showing a central projection method, FIG. 7b is a view showing a weak central projection method;

FIG. 8 is a view for explaining a method which uses two partial model patterns to determine the sign of $\phi$; and

FIG. 9 is a view for explaining a method which utilizes a robot motion to acquire plural images to determine the sign of $\phi$.

DETAILED DESCRIPTION

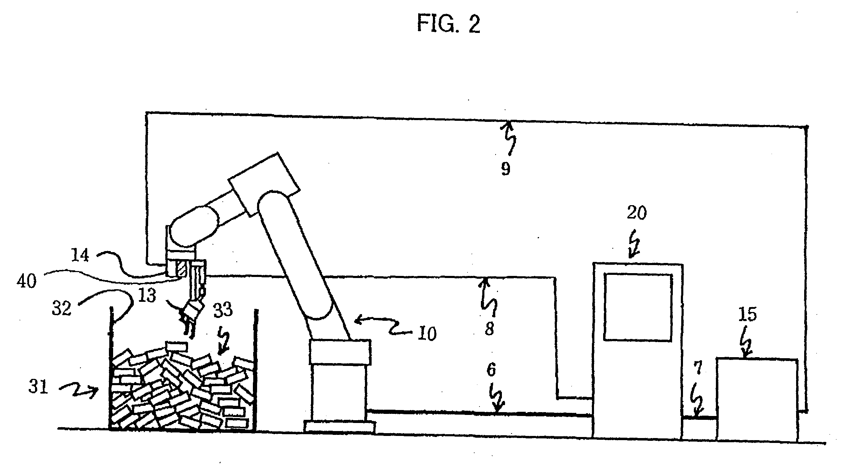

FIG. 2 shows the outline of overall arrangement of a robot system according to an embodiment of the present invention. As illustrated, reference numeral 10 denotes, for example, a vertical articulated robot (hereinafter simply referred to as "robot") which is connected via cables 6 to a robot controller 20 and whose operations are controlled by the robot controller 20. The robot 10 has an arm end to which are attached a hand 13 and an image capturing means 14. The hand 13 is provided with a grasping mechanism suitable to grasp an object (part) 33 to be taken out, and is operatively controlled by the robot controller 20. Signals and electric power for control of the hand 13 are supplied through cables 8 connecting the hand 13 with the robot controller 20.

The image capturing means 14, which may be the conventionally known one such as a CCD video camera, is connected to a control processing unit 15 for visual sensor through cables 9. The control processing unit 15, which may be a personal computer for example, is comprised of hardware and software for controlling a sensing operation of the image capturing means, for processing optical detection signals (video image signals) obtained by the sensing operation, and for delivering required information to the robot controller 2 through a LAN network 7.

Processing to detect an object 33 from a two dimensional image is performed based on an improved matching method in a manner mentioned below. In this embodiment, the image capturing means 14 and the control processing unit 15 are used in combination to serve as an "image processing device" of the present invention. Reference numeral 40 is a displacement sensor mounted, where required, to the robot. A method of using this sensor will be described below.

In the illustrated example, a number of objects 33 to be taken out using the hand 13 are received in a basket-like container 31 disposed near the robot 10 such that they are randomly stacked therein. The container 31 used for example herein has a square opening defined by a peripheral wall 32 although the shape of the container is not generally limited thereto. The objects 33 are not required to be received in the container so long as they are placed in a predetermined range in such a manner that image capturing and holding of these objects can be made without difficulty.

To perform an operation of removing the objects 33 by means of the aforementioned robot system, desired one or more of the objects must be first recognized by using the image processing device (image capturing means 14 and control processing unit 15). To this end, an image capturing command is delivered from the robot controller 2 to the control processing unit 15, and a two dimensional image including an image of one or more objects 33 is acquired with the field of view of appropriate size (capable of capturing the image of at least one object 33). In the control processing unit 15, image processing is performed by software to obtain a two dimensional image from which an object is detected. In the prior art, the aforesaid problem is encountered since the orientation of the object is irregular and unknown. The present embodiment solves this problem by performing a pattern matching, in which is used a transformed model pattern obtained by geometrically transforming a taught model pattern, as will be explained below.

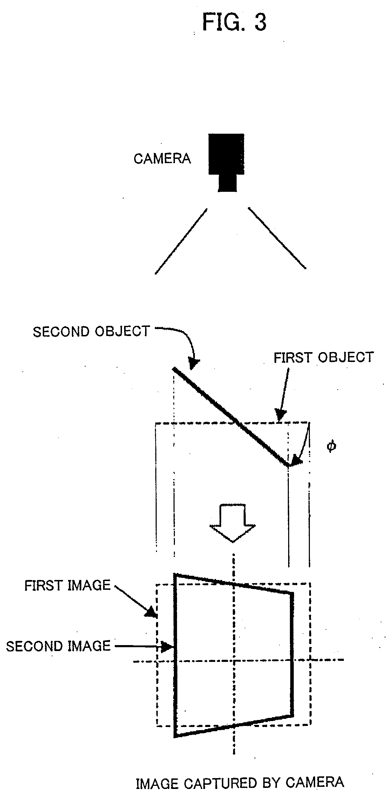

FIG. 3 shows what image is obtained when an inclined object (corresponding to the object 33 in FIG. 2) is captured by a camera (corresponding to the image capturing means 14 in FIG. 2). For simplicity of explanation, it is assumed that first and second objects are the same in size and square in shape. When the first object is disposed to face the camera, a first square image is formed on the camera, which will serve as a reference model image to be used for the matching. Since the image capturing to acquire the reference model image can generally be made in an arbitrary direction, it is unnecessary to dispose the object to face the camera for acquisition of the object image.

The second object is disposed to be inclined at an angle $\phi$ in $\theta$ direction (i.e., in a plane parallel to the paper), and a second image which is distorted in shape is formed on the camera. The "$\theta$ direction" represents the direction which forms, around the optical axis of the camera, an angle of $\theta$ with respect to the direction along which the first object (at the position/orientation assumed at the time of capturing the reference image) extends. In an upper part of FIG. 3, illustration is in the form of a projected drawing as seen in the direction of $\theta$ (in the form of a section view taken along a plane extending in parallel to the direction of angle $\theta$).

Now we consider to find a two dimensional geometric transformation that can represent a relationship between the first image (reference image) and the second image (image of the object whose position and orientation are three dimensionally different from those of the object used for the acquisition of the reference image). If the geometric transformation representing the relationship between these images can be attained, an image closely similar to the second image can be created by geometrically transforming the first image, which is taught beforehand as model pattern.

First, a change in three dimensional orientation of the object in a three dimensional space is defined as shown in the following formula (1):

$$\begin{bmatrix} x' \\ y' \\ z' \end{bmatrix} = \begin{bmatrix} r1 & r2 & r3 \\ r4 & r5 & r6 \\ r7 & r8 & r9 \end{bmatrix} \begin{bmatrix} x \\ y \\ z \end{bmatrix} \quad \cdots\cdots (1)$$

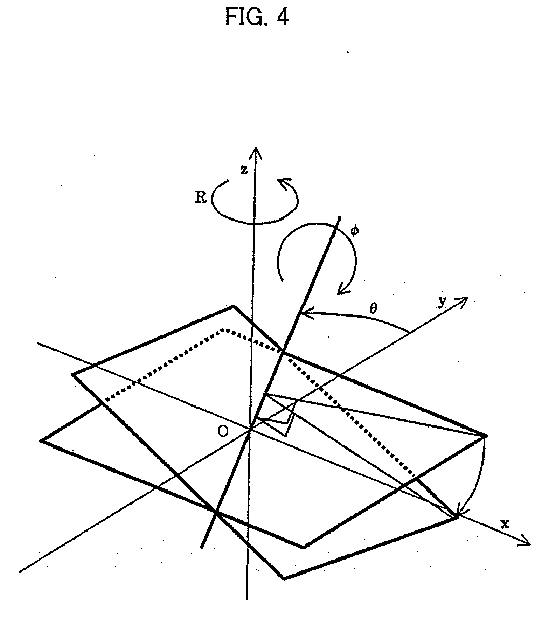

Matrix elements r1-r9 in the rotating matrix in formula (1) can be defined variously. By way of example, as shown in FIG. 4, a reference point O is set near the center of the object. Symbol R denotes rotation around a straight line passing through the point O and extending parallel to z axis, and $\phi$ denotes rotation around a straight line obtained by rotating a straight line passing through the point O and extending parallel to the y axis by $\theta$ around the z axis. These three parameters are defined as shown in formula (2), and respective elements are listed in formulae (3). Meanwhile, the definitions may be made using other means (such as for example, roll, pitch, yaw).

$$\begin{bmatrix} r1 & r2 & r3 \\ r4 & r5 & r6 \\ r7 & r8 & r9 \end{bmatrix} = \begin{bmatrix} \cos\theta & -\sin\theta & 0 \\ \sin\theta & \cos\theta & 0 \\ 0 & 0 & 1 \end{bmatrix} \begin{bmatrix} \cos\phi & 0 & \sin\phi \\ 0 & 1 & 0 \\ -\sin\phi & 0 & \cos\phi \end{bmatrix}$$

$$\begin{bmatrix} \cos\theta & \sin\theta & 0 \\ -\sin\theta & \cos\theta & 0 \\ 0 & 0 & 1 \end{bmatrix} \begin{bmatrix} \cos R & -\sin R & 0 \\ \sin R & \cos R & 0 \\ 0 & 0 & 1 \end{bmatrix} \quad \cdots\cdots (2)$$

$$\left. \begin{aligned} r1 &= \cos\phi\cos\theta\cos(R-\theta) - \sin\theta\sin(R-\theta) \\ r2 &= -\cos\phi\cos\theta\sin(R-\theta) - \sin\theta\cos(R-\theta) \\ r3 &= \sin\phi\cos\theta \\ r4 &= \cos\phi\sin\theta\cos(R-\theta) + \cos\theta\sin(R-\theta) \\ r5 &= -\cos\phi\sin\theta\sin(R-\theta) + \cos\theta\cos(R-\theta) \\ r6 &= \sin\phi\sin\theta \\ r7 &= -\sin\phi\cos(R-\theta) \\ r8 &= \sin\phi\sin(R-\theta) \\ r9 &= \cos\phi \end{aligned} \right\} \quad \cdots\cdots (3)$$

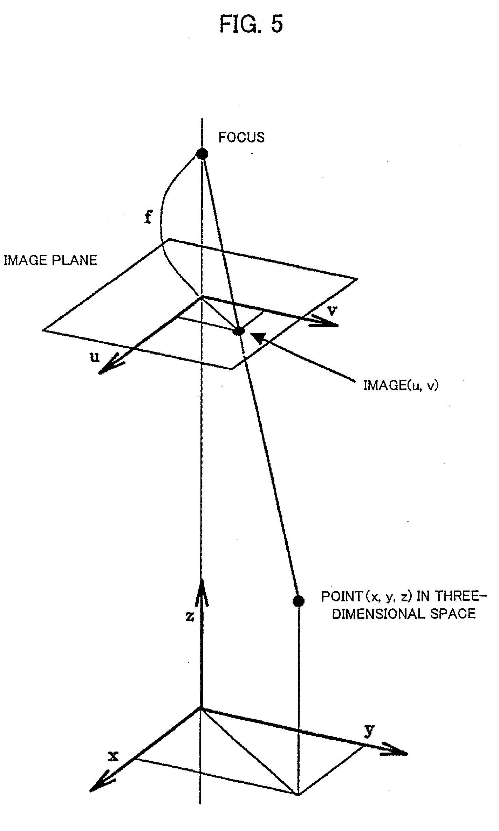

The image capturing by camera is a sort of "mapping for projecting points in a three dimensional space onto a two dimensional plane (image plane). " Thus, a camera model representing such mapping will be considered next. By way of example, an ideal pinhole camera model as shown in FIG. 5 is adopted here. If it is assumed that the focal length of the pinhole camera equals to f, the relationship between a point (x, y, z) in the three dimensional space and the image (u, v) of the point is represented by the following formulae (4):

$$u = \frac{f}{z}x \\ \left. \vphantom{\begin{array}{c}a\\b\\c\end{array}} \right\} \quad \cdots\cdots \quad (4) \\ v = \frac{f}{z}y$$

Assuming that the coordinates of the point O and an arbitrary point P on the object in the three dimensional space at the time when the model pattern is taught are (x0, y0, z0) and (x1, y1, z1), respectively, the image (u0, v0) of the point O obtained when the model pattern is taught is represented by formulae (5) which are as follows:

$$u0 = \frac{f}{z0}x0 \\ \left. \vphantom{\begin{array}{c}a\\b\\c\end{array}} \right\} \quad \cdots\cdots \quad (5) \\ v0 = \frac{f}{z0}y0$$

Considering that the object is disposed opposite the camera when the model pattern is taught, a relation of z1=z0 is satisfied and hence the image (u1, v1) of the point (x1 , y1, z1) is represented by the following formulae (6):

$$u1 = \frac{f}{z1}x1 = \frac{f}{z0}x1 \\ \left. \vphantom{\begin{array}{c}a\\b\\c\end{array}} \right\} \quad \cdots\cdots \quad (6) \\ v1 = \frac{f}{z1}y1 = \frac{f}{z0}y1$$

Next, a case is considered in which the orientation of the object is changed by r1, r2, $\cdots$ , r9 in the three dimensional space, and a parallel displacement is made such that the point O moves to (x2, y2, z2). The coordinate (x3, y3, z3) of the point P after the displacement is represented by formulae (7), the image (u2, v2) of the point O (x2, y2, z2) after the displacement is represented by formulae (8), and the image (u3, v3) of the point P (x3, y3, z3) after the displacement is represented by formulae (9), which are as follows:

$$x3 = r1(x1-x0) + r2(y1-y0) + r3(z1-z0) + x2 \\ y3 = r4(x1-x0) + r5(y1-y0) + r6(z1-z0) + y2 \quad\left. \vphantom{\begin{array}{c}a\\b\\c\\d\end{array}}\right\}\quad \cdots\cdots (7) \\ z3 = r7(x1-x0) + r8(y1-y0) + r9(z1-z0) + z2$$

$$u2 = \frac{f}{z2}x2 \\ \left. \vphantom{\begin{array}{c}a\\b\\c\end{array}} \right\} \quad \cdots\cdots \quad (8) \\ v2 = \frac{f}{z2}y2$$

6

$$u3 = \frac{f}{z3}x3$$

$$\left. \begin{array}{c} \\ \\ \\ \\ \end{array} \right\} \quad \cdots \cdots \quad (9)$$

$$v3 = \frac{f}{z3}y3$$

The problem in question is to find how the shape of the object image changes in the picture image when a three dimensionally different relative orientation is assumed by the object. Thus, it is enough to determine the relation in respect of the change of the image of a vector OP. Here, u, v, u' and v' are defined as shown by the following formulae (10). The image of the vector OP at the time when the model pattern is taught is represented by (u, v), whereas the image of the vector OP after the movement is represented by (u', v').

$$u = u1 - u0 = \frac{f}{z0}x1 - \frac{f}{z0}x0 = \frac{f}{z0}(x1 - x0)$$

$$v = v1 - v0 = \frac{f}{z0}y1 - \frac{f}{z0}y0 = \frac{f}{z0}(y1 - y0)$$

$$\left. \begin{array}{c} \\ \\ \\ \\ \\ \\ \end{array} \right\} \quad \cdots \cdots (10)$$

$$u' = u3 - u2 = \frac{f}{z3}x3 - \frac{f}{z2}x2$$

$$v' = v3 - v2 = \frac{f}{z3}y3 - \frac{f}{z2}y2$$

Substituting formulae (5)-(9) for formulae (10) and rearranging gives the following formulae (11):

$$u' = \frac{f(fx2 + z0(r1u + r2v))}{fz2 - z0(r7u - r8v))} - \frac{fx2}{z2}$$

$$\left. \begin{array}{c} \\ \\ \\ \end{array} \right\} \quad \cdots \cdots (11)$$

$$v' = \frac{f(fy2 + z0(r4u + r5v))}{fz2 - z0(r7u - r8v))} - \frac{fy2}{z2}$$

It is therefore understood that formulae (11) show the geometrical transformation representing a change in shape of the object image which is caused when the object assumes a three dimensionally different position/orientation in the three dimensional space. To be noted, the right sides of formulae (11) individually include terms of x2 and y2. This indicates that the shape of the image picked up by the camera may be distorted, only if the object is subject to a parallel displacement in a plane perpendicular to the optical axis of the camera (even without a change in the three dimensional orientation of the object).

Although the method of pattern matching an image to a model pattern cannot be applied under the presence of the aforementioned components, these components are negligible, if a distance between the camera and the object is sufficiently large. Thus, it is assumed here that these components are small enough to be negligible. Specifically, it is assumed that the image has the same shape as that obtained when x=0 and y=0, irrespective of values of X2 and y2. In other words, it is assumed that x2=0 and y2=0. Thus, formulae (11) are replaced by formulae (12) which are as follows:

$$u' = \frac{fs(r1u + r2v)}{f - s(r7u - r8v)}$$

$$v' = \frac{fs(r4u + r5v)}{f - s(r7u - r8v))}$$

$$\cdots\cdots (12)$$

In formulae (12), there is a relation of s = z0/z2, which is a value representing how many times the object distance from the camera to the object is smaller than that at the time of teaching the model pattern. In other words, it is an amount or a scale that represents how many times the image size is scaled up or down in the picture image as compared to that at the time of teaching the model pattern.

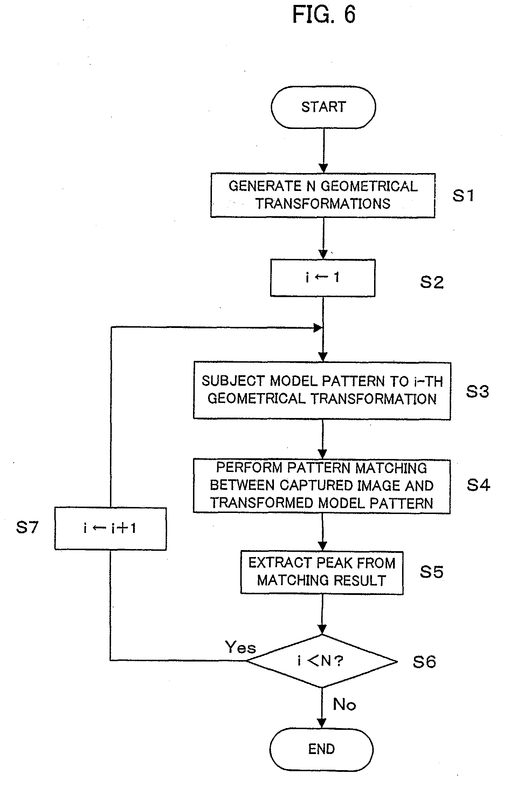

On the basis of the above explanations, examples of processing procedures will be explained in which a geometric transformation based on formulae (12) is adopted. Though the present invention can be embodied in various forms, the processing procedure according to the most basic form will be first explained with reference to a flowchart shown in FIG. 6. In the meantime, the processing is executed in the control processing unit 15 by means of a CPU and software installed in advance, and it is assumed that a reference image used for pattern matching and a model pattern (here, a rectangular characterized portion) extracted therefrom have already been stored in the control processing unit 15 (refer to FIG. 2).

At Step S1, a plurality of geometric transformations are generated. For instance, in a case where r1-r9 are defined as shown in formula (2), the three dimensional relative orientation of the object can be defined using three parameters, R, $\theta$, and $\phi$. Four parameters, including the scale s in formulae (12) in addition to the three parameters, are used here as pieces of information indicative of the three dimensional position/orientation of the object. The focal distance f of the camera is treated as being constant, since it is kept unchanged after the camera has once been set.

Given variable ranges of s, R, $\theta$, and $\phi$ as well as pitches with which they are varied, the geometric transformations can be determined. Here, it is assumed that variable ranges of s, R, $\theta$, $\phi$ and pitches with which they are varied are given as shown in Table 1.

TABLE 1

|  | RANGE | DISTANCE |
|---|---|---|
| R | -180° - 180° | 10° |
| S | 0.09 - 1.1 | 0.05 |
| 0 | -90 - 90° | 10° |
| $\phi$ | -10-10° | 10° |

That is, s is varied from 0.9 to 1.1 in increments of 0.05, R is varied from - 180 to +180 in increments of 10, $\theta$ is varied from -90 to +90 in increments of 10, and $\phi$ is varied from -10 to +10 in increments of 10. Since geometric transformations can be generated by a number of combinations of s, R, $\theta$ and $\phi$, the number N of possible geometric transformations is equal to

$$[\{180 - (-180)\} \div 10] \times \{(1.1 - 0.9) \div 0.05 + 1\} \times [\{90 - (-90)\} \div 10 + 1] \times$$

$$[\{10 - (-10)\} \div 10 + 1] = 10545.$$

At Step 2, the initial setting (i=1) is performed on an index i that specifies the i-th geometric transformation among the N geometric transformations.

At Step 3, the i-th transformed model pattern is prepared by transforming the model pattern using formulae (12). In this calculation, values of s, R, $\theta$, and $\phi$ corresponding to the i-th transformed model pattern are used.

At next Step S4, a pattern matching is performed using the i-th transformed model pattern.

To be noted, detailed contents of Steps S3 and S4 vary depending on what pattern matching method is used. Any one of various known pattern matching methods can be selected. For instance, in the case of a pattern matching using a normalized crosscorrelation or a SAD, in which a grayscale pattern per se of picture image constitutes the model pattern, it is enough to shift the grayscale pattern in units of picture element such that the picture element (u, v) in the original pattern is shifted to the picture element (u', v') in the transformed pattern.

On the other hand, in the case of a pattern matching such as a generalized Hough transform using feature points, an R table may be transformed in such a manner that a vector (u, v) from the reference point to a feature point is transformed into a vector (u', v').

Next, at Step S5, a local maximum point having a similarity equal to or higher than a preset value is searched for from results of the pattern matching. If such local maximum point is found, coordinate values (u, v) of the local maximum points in the image plane are extracted and then stored together with pieces of information s, R, $\theta$, and $\phi$ on the three dimensional orientation (parameters specifying the i-th transformed model pattern) that were used for the preparation of the transformed model pattern.

At Step S6, whether or not the pattern matching is completed in respect of all the geometric transformations generated at Step S1 is determined. If there is one or more of the transformations that have not been subject to the pattern matching, the index i is incremented by one (Step 7), and the flow is returned to Step S3, whereupon Steps S3-S7 are repeated.

With the aforementioned processing, Step S5 can determine the transformed model pattern having the best similarity with the model pattern, and can determine the parameter values s, R, $\theta$, and $\phi$ used for the preparation of such transformed model pattern. In other words, it is possible to confirm that the image obtained by geometrically transforming the input image coincides with the object image obtained at the time of teaching (i.e., the object image can certainly be recognized), and the three dimensional position and/or orientation of the object can be determined based on the parameter values s, R, $\theta$, and $\phi$, and the coordinate values (u, v) of the local maximum points.

Meanwhile, Step S5 may select the transformed model patterns individually having the best similarity and the next best similarity, and may determine average values of parameter values s, R, $\theta$, and $\phi$, respectively used for the preparation of these patterns, as the parameter values to be used to determine the position and/or orientation of the object.

Processing procedures for a case where the present invention is embodied in another form are basically the same as in the most basic form, except that the prepared transformed model patterns are stored so as to individually correspond to pieces of information on orientations used for the preparation of the transformed model patterns, and the pattern matching is made in sequence in respect of the stored transformed model patterns.

Further, a camera model may be constructed based on a weak central projection method, whereby formulae (12) are simplified. In this case, there is a relation of r7 = r8 = 0 in formulae (12), so that formulae (12) are replaced by formulae (13) in which the geometrical transformation is represented by an affine transformation and which are as follows:

$$\left. \begin{array}{l} u' = s(r1u + r2v) \\ \\ v' = s(r4u + r5v) \end{array} \right\} \quad \cdots\cdots\cdots \quad (13)$$

Also in this case, basic procedures are the same as those in the above cases, except that Step S3 uses, as transformation formulae, formulae (13) instead of formulae (12). In formulae (13), sin$\phi$ contained in the terms of r7 and r8 is neglected, and hence the sign of an angle $\phi$ at which the object is disposed becomes unknown.

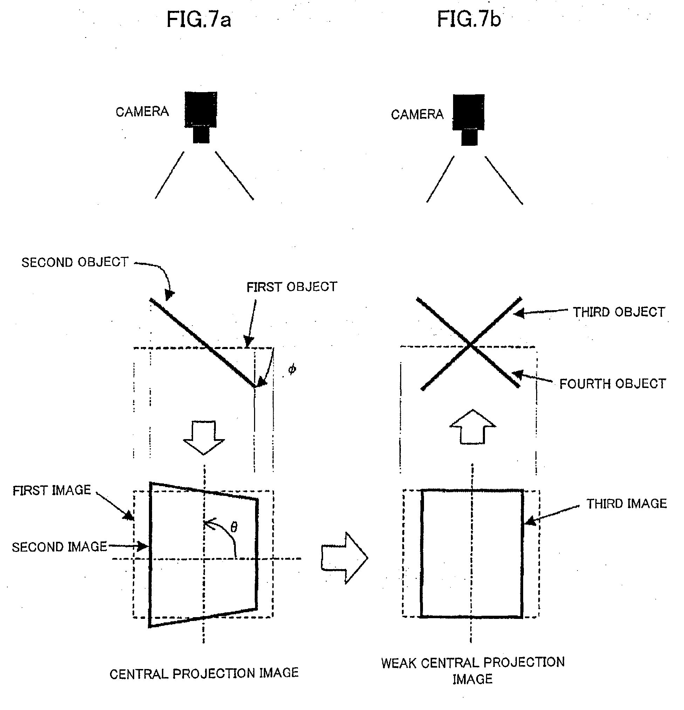

This situation is represented in FIGS. 7a and 7b. A second object produces in nature a second image as shown in FIG. 7a. On the other hand, the weak central projection method considers that a third object (having the same orientation as that of the second object) produces a third image as shown in FIG. 7b. Thus, it cannot be determined whether the object is disposed at an angle of +$\phi$ (as third object) or -$\phi$ (as fourth object).

To find the sign of $\phi$, an additional simple measurement is separately performed.

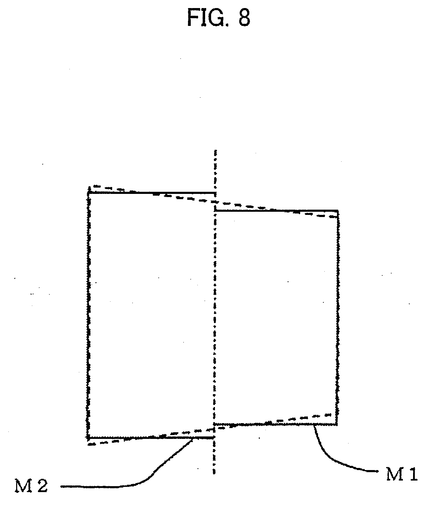

For example, the model pattern is divided into two with respect to $\theta$ axis, and a pattern matching using the two partial model patterns is performed again. Since a conformable position (u, v) has been known from results of the original pattern matching, the pattern matching using the partial model patterns may be made around the conformable position. Specifically, the two partial model patterns are subject to geometric transformation to obtain various transformed partial model patterns from which are determined those two transformed partial model patterns M1, M2 that are most conformed to the image (shown by dotted line) as shown in FIG. 8. Then, a determination is made to determine by comparison which of s values of the patterns M1, M2 is larger, whereby the sign of $\phi$ can be determined.

Alternatively, a displacement sensor 40 (see, FIG. 2) or the like is provided on a wrist portion of the robot, and is used to measure displacements of two points on the object, preferably each being on either side of the θ axis in the conformed pattern, that are determined by pattern matching. Then, the two displacements are compared to determine which of them is larger, thus determining the sign of φ.

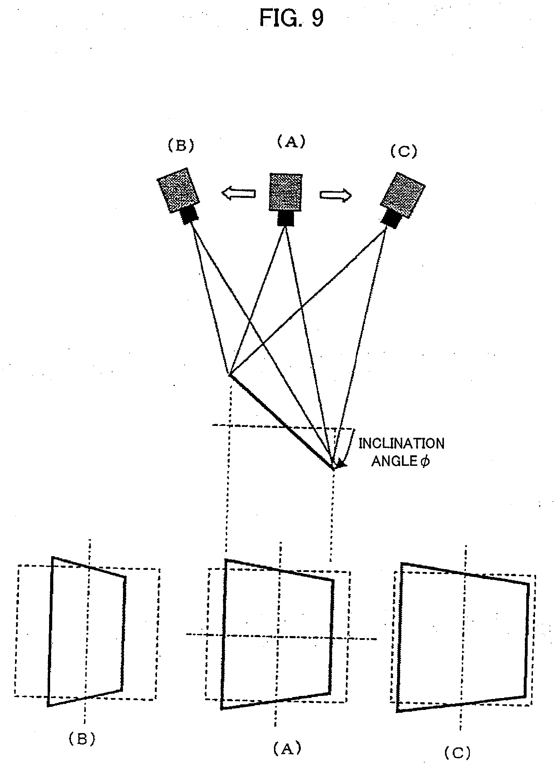

Further, in a case where the camera 14 is mounted to the wrist portion of the robot or the like as in the present embodiment, the camera mounted to the robot is slightly moved or inclined by the robot controller in a direction perpendicular to the θ axis of the conformed pattern, and then a pattern matching is performed for an image that is captured again. This situation is shown in FIG. 9 in which images denoted by symbols (A), (B), and (C) are ones obtained by the camera positioned at image capturing positions (A), (B), and (C) shown in an upper part of FIG. 9, respectively.

In case that the first image capturing position is at (A), the camera may then be moved to either the position (B) or (C). Thereafter, a pattern matching is performed again for an image captured at the position (B) or (C), and a comparison is made to determine whether the φ of the conformed pattern is larger or smaller than that of the first pattern matching, whereby the sign of φ can be determined. (For instance, in a case where the camera is moved from the position (A) to the position (B), "φ at (A) > φ at (B)" or "φ at (A) < φ at (B)" is determined.)

To be noted, values determined in the sensor coordinate system in respect of the position and/or orientation of the object is transformed into data in the robot coordinate system using data acquired beforehand by calibration, to be utilized for robot operation. The three dimensional position and/or orientation of the object in the actual three dimensional space (the object detected by means of the aforementioned improved matching method) can be determined on the basis of data in the robot coordinate system and the position of the robot at the time of image capturing (which is always detected by the robot controller).

In order to make a grasping operation in the arrangement shown in FIG. 2, each object is grasped and taken out after the operating orientation of or the operating orientation and operating position of the robot are determined according to a known method on the basis of the three dimensional position and/or orientation of the object 33 detected by means of the improved matching method (data in the robot coordinate system). After completion of grasping and removing one object, the next object is detected according to the aforementioned procedures, and then the object is grasped and taken out. In a case where there is a plurality of object images in an image, the improved matching method may sequentially be applied to the object images to thereby detect the objects in sequence.

As explained above, according to the present invention, an object (a part, for example) in acquired image data can be determined based on a single model pattern of the object taught beforehand to thereby recognize a three dimensional position and/or orientation of the object not only when there is a parallel displacement and/or a rotational displacement and/or a vertical displacement (scaling on image) of the object that does not change the shape of an object image as compared to that at the time of teaching the model pattern, but also when the object is subject to a three dimensional relative position displacement so that the shape of the object image becomes different from that at the time of the teaching.

**Claims**

1. An image processing device for determining three-dimensional position and/or orientation of an object, comprising:

    image data capturing means for capturing image data containing an image of the object;
    model pattern creating means for creating a model pattern based on image data of a reference object with a reference orientation relatively to said image capturing means captured by said image capturing means, said reference object having a shape substantially identical to that of the object;
    transformation means for performing two-dimensional and geometrical transformation of the created model pattern to generate a transformed model pattern representing an image of the object with an orientation different from the reference orientation;
    pattern matching means for performing a pattern matching of the image data of the object captured by said image capturing means with the transformed model pattern;
    selecting means for repeatedly performing the generation of a transformed model pattern and the pattern matching of the image data of the object with the transformed model pattern to thereby select one of the transformed model patterns in conformity with the image data of the object, and obtain information on a position of the image of the object in the image data; and
    determining means for determining three-dimensional position and/or orientation of the object based on the information on the position of the image of the object in the image data and information on the orientation of the selected one of the transformed model patterns.

2. An image processing device for determining three-dimensional position and/or orientation of an object, comprising:

image data capturing means for capturing image data containing an image of the object;

model creating means for creating a model pattern based on image data of a reference object with a reference orientation relative to said image data capturing means captured by said image data capturing means, said reference object having a shape substantially identical to that of the object;

transformation means for performing two-dimensional and geometrical transformation of the created model pattern to generate a plurality of transformed model patterns each representing an image of the object with an orientation different from the reference position;

storage means for storing the plurality of transformed model patterns and information on orientations of the respective transformed model patterns;

pattern matching means for performing pattern matching of the image data of the object captured by said image capturing means with the plurality of transformed model patterns to thereby select one of the transformed model patterns in conformity with the image data of the object, and obtain information on a position of the image of the object in the image data; and

determining means for determining three-dimensional position and/or orientation of the object based on information on the position of the image of the object in the image data and the information on an orientation of the selected one of the transformed model patterns.

3. An image processing device according to claim 1 or 2, wherein said transformation means performs the two-dimensional and geometrical transformation of an affine transformation, and said image processing device further comprises additional measuring means for obtaining a sign of inclination of the object with respect to said image capturing means.

4. An image processing device according to claim 3, wherein said additional measuring means performs dividing of a model pattern into at least two partial model patterns which are subject to the affine transformation to generate transformed partial model patterns, and pattern matching of the image data of the object with the transformed partial model patterns to determine most conformable sizes, and determines the sign of the inclination based on comparison of the sizes of the conformable partial model patterns with each other.

5. An image processing device according to claim 3, wherein said additional measuring means performs measurement of distances from a displacement sensor separately provided in the vicinity of said image capturing means to at least two points on the object using the displacement sensor, and determines the sign of the inclination based on comparison of the measured distances.

6. An image processing device according to claim 3, wherein said additional measuring means performs additional pattern matching of image data of the object captured after said image data capturing means is slightly moved or inclined and determines the sign of the inclination based on judgment whether an inclination of image of the object becomes larger or smaller than the selected one of the transformed model patterns.

7. An image processing device according to claim 1, wherein the image processing device is incorporated into a robot system comprising:

storage means storing an operating orientation of the robot relative to the object or storing an operating orientation and an operating position of the robot relative to the object; and

robot control means for determining an operating orientation of the robot or the operating orientation and an operating position of the robot based on the determined three-dimensional position and/or orientation of the object.

8. An image processing device according to claim 7, wherein said image capturing means is mounted on the robot.

FIG.1a

FIG.1b

CAMERA

IMAGE

OBJECT

CAMERA

IMAGE

OBJECT

FIG. 2

# FIG. 3

CAMERA

SECOND OBJECT

FIRST OBJECT

φ

FIRST IMAGE

SECOND IMAGE

IMAGE CAPTURED BY CAMERA

FIG. 4

# FIG. 5

FOCUS

f

IMAGE PLANE

v

u

IMAGE(u, v)

z

POINT(x, y, z) IN THREE-DIMENSIONAL SPACE

x

y

# FIG. 6

```
        ┌─────────────┐
        │    START    │
        └──────┬──────┘
               │
               ▼
   ┌──────────────────────┐
   │ GENERATE N GEOMETRICAL│   S1
   │   TRANSFORMATIONS     │
   └──────────┬───────────┘
              │
              ▼
       ┌────────────┐
       │   i ← 1    │         S2
       └─────┬──────┘
             │
             ▼
   ┌──────────────────────────┐
   │ SUBJECT MODEL PATTERN TO i-TH │  S3
   │ GEOMETRICAL TRANSFORMATION    │
   └──────────┬───────────────┘
              │
              ▼
   ┌──────────────────────────┐
   │ PERFORM PATTERN MATCHING  │
   │ BETWEEN CAPTURED IMAGE AND │  S4
   │ TRANSFORMED MODEL PATTERN  │
   └──────────┬───────────────┘
              │
              ▼
   ┌──────────────────────┐
   │ EXTRACT PEAK FROM     │   S5
   │ MATCHING RESULT       │
   └──────────┬───────────┘
              │
              ▼
          ◇ i < N ?         S6
      Yes ◇         No
```

S7    i ← i+1

END

# FIG.7a

## FIG.7b

CAMERA

CAMERA

SECOND OBJECT

FIRST OBJECT

$\phi$

THIRD OBJECT

FOURTH OBJECT

FIRST IMAGE

$\theta$

THIRD IMAGE

SECOND IMAGE

CENTRAL PROJECTION IMAGE

WEAK CENTRAL PROJECTION IMAGE

FIG. 8

M 2

M 1

# FIG. 9

(B)  (A)  (C)

INCLINATION
ANGLE φ

(B)  (A)  (C)